# EUROPEAN PATENT APPLICATION

(11) **EP 2 093 991 A2**
(43) Date of publication of application: **26.08.2009**
(21) Application number: 09153070.9
(22) Date of filing: 18.02.2009
(51) Int. Cl.: H04N 1/00, H04N 1/21

(54) **Recording control apparatus, one-time recording medium, recording system, and recording medium control method and program**

(30) Priority: 19.02.2008 JP 2008037530
(71) Applicant: Sony Corporation, Tokyo (JP)
(72) Inventor: Take, Kunihiko c/o Sony Corporation, Tokyo (JP); Yokota, Junichi c/o Sony Corporation, Tokyo (JP); Kaise, Fumihiko c/o Sony Corporation, Tokyo (JP)
(74) Representative: Thévenet, Jean-Bruno

(57) **Abstract**

A recording control apparatus includes an attribute information reader (111), a medium determining unit (112), and a command transmitter (113). When a recording medium (20) is removably loaded into a loading unit (11), the attribute information reader (111) reads attribute information therefrom. On the basis of the attribute information, the medium determining unit (112) determines whether or not the recording medium (20) is a one-time recording medium capable of writing data only once. If the recording medium (20) is determined to be a one-time recording medium that has been set to a write-protected state in advance, the command transmitter (113) transmits to the recording medium (20) an unlock command for unlocking the write-protected state thereof.

## Description

The present invention contains subject matter related to Japanese Patent Application JP 2008-037530 filed in the Japanese Patent Office on February 19, 2008.

### BACKGROUND OF THE INVENTION

### 1. Field of the Invention

The present invention relates to a recording control apparatus, a one-time recording medium, a recording system, and a recording medium control method and program.

### 2. Description of the Related Art

In electronic devices such as digital cameras, it is possible to load an external recording medium, such as a memory card, and record thereon various data, such as acquired images. The recording medium may be provided with a write-protect switch for protecting data stored thereon. By switching the write-protect switch on, loss of data stored in the recording medium due to accidental deletion, overwriting, or similar operations can be prevented.

However, it is inconvenient for the user to remove the recording medium from the digital camera and manually switch the write-protect switch on and off. For this reason, Japanese Unexamined Patent Application Publication No. JP 2007-49283 (no family), for example, proposes a digital still camera able to execute overwrite and deletion operations with respect to a recording medium without removing the recording medium, even if the write-protect switch is on.

### SUMMARY OF THE INVENTION

Meanwhile, in order to provide lower-priced recording media, recording media have been developed in recent years that use one-time programmable (OTP) storage devices, for which writing is possible one time and with no rewrites (hereinafter referred to as one-time recording media). While OTP optical discs such as CD-Rs (Compact Disc Recordable) and DVD-Rs (Digital Versatile Disc Recordable) have existed in the related art for some time, higher-priced OTP memory cards have also appeared recently.

A characteristic feature of one-time recording media like the above is that the remaining free space decreases when a file is rewritten or deleted. Consequently, when such a recording medium is loaded into and used in equipment such as a personal computer (PC), there is a problem in that file rewrites may occur without the user's knowledge, thereby resulting in a discrepancy with respect to the amount of free space assumed to exist by the user. For example, when a one-time recording medium is connected to a PC and data is transferred therebetween, the operating system (OS) of the PC may conduct operations to automatically write metadata to one or more files, such as metadata indicating the time when the corresponding files in the medium were last modified, and thus arbitrarily rewriting metadata in the medium without the user's consent.

In such cases, if the medium is a rewritable recording medium for which the rewriting of data is possible, then the originally stored metadata is simply overwritten and the remaining free space of the medium is not decreased. However, in the case of a one-time recording medium, the originally stored metadata is not deleted, and thus the metadata is newly written to a separate memory area while the original metadata is invalidated. Consequently, the remaining free space of the one-time recording medium is decreased. From the user's perspective, this adverse behavior causing the storage capacity of the recording medium to decrease occurs as a result of simply connecting a digital camera having the one-time recording medium loaded therein to a PC.

In order to prevent such problems, the present inventors devised a configuration wherein the one-time recording medium is set by default to a write-protected state in advance, thereby preventing rewrites or similar operations by the PC when the recording medium is directly connected to the PC, or even when connected via a digital camera. However, such a configuration is inconvenient, as it involves the user first unlocking the default write-protected state in order to enable recording of acquired image data to the recording medium before the recording medium is loaded into a digital camera.

However, technology for unlocking write protection like that disclosed in JP 2007-49283 ultimately involves the user first deciding whether or not to unlock the write protection, and then manually performing an operation with respect to the camera. For this reason, even if such technology is applied to a one-time recording medium, the user may forget the operation to unlock the write protection at the time of image acquisition and thereby lose a photographic opportunity. There is also a problem in that the remaining free space of the recording medium may be wastefully decreased if the digital camera is connected to the PC with the write protection still unlocked.

Consequently, the present invention, having been devised in light of the foregoing problems, provides a new and improved recording control apparatus, one-time recording medium, recording system, and recording medium control method and program able to appropriately and automatically control the locking and unlocking of the write protection of a one-time recording medium according to how the recording medium is being used.

A recording control apparatus in accordance with an embodiment of the present invention that solves the foregoing problems is provided with: an attribute information reader configured to read recording medium attribute information from a recording medium that has been loaded into at least one loading unit into which a plurality of types of recording media may be removably loaded; a medium determining unit configured to determine, on the basis of the attribute information, whether or not the recording medium is a one-time recording medium capable of writing data once; and a command transmitter configured such that in the case where the recording medium is a one-time recording medium that has been set to a write-protected state in advance, the command transmitter transmits to the recording medium an unlock command for unlocking the write-protected state thereof.

As a result of such a configuration, recording medium attribute information is read from a recording medium loaded into at least one loading unit into which a plurality of types of recording media may be removably loaded. On the basis of the attribute information, it is determined whether or not the recording medium is a one-time recording medium capable of writing data once. If the recording medium is a one-time recording medium that has been set to a write-protected state in advance, then an unlock command for unlocking the write-protected state is transmitted to the one-time recording medium. In so doing, the write-protected state of the one-time recording medium is unlocked upon receiving the unlock command, and the recording control apparatus is thereby able to write data to the one-time recording medium. In addition, when the one-time recording medium is loaded into another apparatus, an unlock command is not received, and thus the write-protected state is not unlocked. Consequently, the rewriting of data within the one-time recording medium is prevented.

Herein, the property of being capable of writing data once refers to the inability of modifying particular data after that data has been written to the recording medium, and does not mean that the recording medium is limited to a single data write operation. In other words, the writing of data can be conducted an arbitrary number of times as long as free memory space remains on the one-time recording medium. However, data is not overwritten, and thus the writing of data fails if no remaining free space exists.

The above recording control apparatus may be further provided with: an external interface configured to connect to an information processing device that is incompatible with the one-time recording medium; and a connection detector configured to detect a connection between the recording control apparatus and the information processing device via the external interface. If the write-protected state of a one-time recording medium loaded into a loading unit is unlocked, and furthermore if the connection detector detects a connection between the recording control apparatus and the information processing device, then the command transmitter may transmit to the one-time recording medium a lock command that sets the one-time recording medium to a write-protected state.

The medium determining unit may also be configured to determine whether or not there exists free memory space on a recording medium loaded into a loading unit. The command transmitter may then be configured such that if the recording medium loaded into a loading unit is a one-time recording medium, and additionally, if there exists free memory space on the one-time recording medium, then the command transmitter transmits the unlock command to the one-time recording medium.

The medium determining unit may also be configured such that if the recording medium loaded into a loading unit is a one-time recording medium, then the medium determining unit additionally detects whether or not the write-protected state of the one-time recording medium is unlockable by means of a command. The command transmitter may then be configured to transmit the unlock command to the one-time recording medium if the write-protected state thereof is unlockable.

The medium determining unit may also be configured such that if the recording medium loaded into a loading unit is a rewritable recording medium for which the rewriting of data is possible, then the medium determining unit determines whether or not the rewritable recording medium has been set to a write-protected state by means of a write-protect switch. The recording control apparatus may be further provided with a notification unit configured to output a recording failure notification if the rewritable recording medium is set to a write-protected state or if the recording medium loaded into a loading unit is a read-only recording medium.

The at least one loading unit may also be configured such that a plurality of types of recording media can be selectively and removably loaded thereinto.

In addition, a one-time recording medium in accordance with another embodiment of the present invention that solves the foregoing problems can be removably loaded into a recording control apparatus, and is provided with: a data storage unit to which data can be written once; an attribute information storage unit configured to store one-time recording medium attribute information; a writer configured to write data to the data storage unit; and a controller configured to control the writing of data by the writer. When the one-time recording medium is not loaded into the recording control apparatus, the controller sets the writer to a write-protected state. When the one-time recording medium is loaded into the recording control apparatus, the controller transmits to the recording control apparatus the attribute information stored in the attribute information storage unit. Upon receiving from the recording control apparatus an unlock command for unlocking the write-protected state, the controller unlocks the write-protected state.

The controller may also be configured to set the writer back to a write-protected state if a lock command for setting the write-protected state is received from the recording control apparatus while the write-protected state is unlocked.

The controller may also be configured to maintain the write-protected state of the writer while the one-time recording medium is loaded into an information processing device that is incompatible with the one-time recording medium.

The controller may also be configured to set the writer to a write-protected state if the one-time recording medium is removed from the recording control apparatus, reset by the recording control apparatus, or powered off while in an unlocked state.

A recording system in accordance with another embodiment of the present invention that solves the foregoing problems includes a one-time recording medium capable of writing data once, and a recording control apparatus configured to control the recording of data with respect to the one-time recording medium. The recording control apparatus is provided with: an attribute information reader configured to read recording medium attribute information from a recording medium that has been loaded into at least one loading unit into which a plurality of types of recording media may be removably loaded; a medium determining unit configured to determine, on the basis of the attribute information, whether or not the recording medium is a one-time recording medium; and a command transmitter configured such that in the case where the recording medium is a one-time recording medium that has been set to a write-protected state in advance, the command transmitter transmits to the recording medium an unlock command for unlocking the write-protected state. The one-time recording medium is provided with: a data storage unit for which data can be written once; an attribute information storage unit configured to store one-time recording medium attribute information; a writer configured to write data to the data storage unit; and a controller configured to control the writing of data by the writer. When the one-time recording medium is not loaded into the recording control apparatus, the controller sets the writer to a write-protected state. When the one-time recording medium is loaded into the recording control apparatus, the controller transmits to the recording control apparatus the attribute information stored in the attribute information storage unit. Upon receiving from the recording control apparatus an unlock command for unlocking the write-protected state, the controller unlocks the write-protected state.

In addition, a recording medium control method in accordance with another embodiment of the present invention that solves the foregoing problems is a method for a recording control apparatus that controls the recording of data with respect to a plurality of types of recording media. The method includes the steps of: reading recording medium attribute information from a recording medium that has been loaded into at least one loading unit into which a plurality of types of recording media may be removably loaded; determining, on the basis of the attribute information, whether or not the recording medium is a one-time recording medium; and in the case where the recording medium is a one-time recording medium that has been set to a write-protected state in advance, transmitting to the recording medium an unlock command for unlocking the write-protected state thereof.

In addition, a program in accordance with another embodiment of the present invention that solves the foregoing problems causes a computer to execute the steps of: reading recording medium attribute information from a recording medium that has been loaded into at least one loading unit into which a plurality of types of recording media may be removably loaded; determining, on the basis of the attribute information, whether or not the recording medium is a one-time recording medium; and in the case where the recording medium is a one-time recording medium that has been set to a write-protected state in advance, transmitting to the recording medium an unlock command for unlocking the write-protected state thereof.

According to embodiments of the present invention as described above, it is possible to appropriately and automatically control the locking and unlocking of the write-protected state of a one-time recording medium according to how the recording medium is being used.

### BRIEF DESCRIPTION OF THE DRAWINGS

Fig. 1 is a system diagram illustrating the configuration of a recording system in accordance with a first embodiment of the present invention;
Fig. 2 is a block diagram illustrating the configuration of a digital camera in accordance with the first embodiment;
Fig. 3 is a diagram for explaining recording medium attribute information in accordance with the first embodiment;
Fig. 4 is a block diagram illustrating the configuration of a one-time recording medium in accordance with the first embodiment;
Fig. 5 is a flowchart illustrating the operation of a digital camera when a recording medium in accordance with the first embodiment has been loaded thereinto;
Fig. 6 is a flowchart illustrating the operation of a digital camera in accordance with the first embodiment when a PC is connected thereto;
Fig. 7 is a sequence diagram illustrating the operation of a digital camera in accordance with the first embodiment when a PC is connected thereto;
Fig. 8 is a flowchart illustrating the operation of a one-time recording medium that has been loaded into a digital camera in accordance with the first embodiment; and
Fig. 9 is a flowchart illustrating the operation of a digital camera when a recording medium in accordance with a second embodiment of the present invention has been loaded thereinto.

### DESCRIPTION OF THE PREFERRED EMBODIMENTS

Hereinafter, preferred embodiments of the present invention will be described in detail and with reference to the attached drawings. Furthermore, it should be appreciated that in the present specification and drawings, elements having identical functional configurations in practice will be referred to using identical reference numbers, and repeated description thereof will be omitted herein for the sake of brevity.

### First Embodiment

First, a recording control apparatus, a one-time recording medium, a recording system, and a recording medium control method and program in accordance with a first embodiment of the present invention will be described. Although a digital still camera is given as an exemplary recording control apparatus and a memory card is given as an exemplary recording medium in the first embodiment to be hereinafter described, the present invention is not limited to such examples.

The general features of the present embodiment will be first described. A one-time recording medium is a recording medium that uses a one-time programmable (OTP) memory device, whereby data is written once and with no rewrites. Typically, one-time optical discs such as CD-Rs and DVD-Rs are used in the related art as OTP memory devices. However, in recent years, OTP semiconductor memory upon which data is written once with no rewrites (hereinafter referred to as one-time memory) has also been developed.

A memory card provided with one-time memory (hereinafter referred to as a one-time memory card) can be manufactured at lower cost compared to a memory card provided with a rewritable (RW) memory device such as flash memory (hereinafter referred to as a rewritable memory card or RW memory card). While the unit cost of RW memory cards is higher than that of optical discs, one-time memory cards are extremely compact, and have the advantage of being low in cost like optical discs while also exhibiting the low power draw during data reading and writing that is characteristic of memory cards. For this reason, one-time memory cards have potential for future use.

However, as described earlier, one-time recording media such as one-time memory cards and one-time optical discs have a drawback in that the remaining free space decreases whenever a file is rewritten or deleted. Thus, when a one-time recording medium is loaded into and used with a PC or similar equipment, there is a problem in that file rewrites may occur without the user's knowledge, thereby resulting in a discrepancy with respect to the amount of free space assumed to exist by the user.

In order to prevent such problems, the one-time recording medium is set to a write-protected state to prevent writing when not in use, with the write-protected state being temporarily unlocked when the one-time recording medium is used in a recording control apparatus such as a digital camera (i.e., a host device).

Consequently, in the present embodiment, when a recording medium is loaded into a recording control apparatus, it is first determined, on the basis of attribute information read from the recording medium, whether or not the recording medium is a one-time recording medium that has been set to a write-protected state in advance, and in addition, it is determined whether or not the write-protected state can be unlocked by means of a command sent to the recording medium. If the recording medium is determined to be both a one-time recording medium and unlockable as described above, then an unlock command is automatically transmitted from the recording control apparatus to the recording medium, thereby automatically unlocking the write-protected state. Furthermore, when a recording control apparatus (i.e., a digital camera) having the recording medium loaded thereinto is connected to a PC, a lock command is automatically transmitted from the recording control apparatus to the recording medium, thereby automatically setting the recording medium back to a write-protected state (i.e., reverting to a write-protected state) to prevent the deletion or rewriting of data within the recording medium by the PC.

By thus setting the one-time recording medium to a write-protected state in advance, operations such as the rewriting and deletion of data within the recording medium by the PC is prevented whether the recording medium is connected to the PC directly or via a digital camera. In addition, when an image acquired by the digital camera is to be recorded to the recording medium, the write-protected state of the recording medium is unlocked, thereby setting the recording medium to a usable state.

In other words, the one-time recording medium becomes usable when loaded into a particular recording control apparatus (a digital camera, for example) that is compatible with the one-time recording medium. On the other hand, the one-time recording medium becomes unusable when loaded into an information processing device (a PC, for example) that is incompatible with the one-time recording medium. Hereinafter, a recording system that includes a recording control apparatus and a one-time recording medium in accordance with the present embodiment will be described in detail.

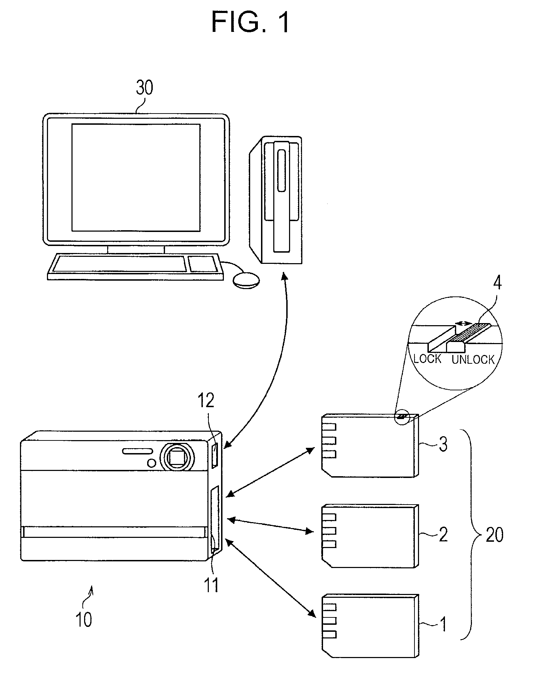

First, the general configuration of a recording system in accordance with the present embodiment will be described with reference to Fig. 1. Fig. 1 is a system diagram illustrating the configuration of a recording system in accordance with the present embodiment.

As shown in Fig. 1, the recording system includes a digital camera 10 (being an example of the recording control apparatus herein) as well as a plurality of different types of recording media 20.

The digital camera 10 is a host device into which one of the recording media 20 is loaded. The digital camera 10 herein is an exemplary imaging device that acquires images of subjects, being at least a digital still camera that acquires still images. Although acquired image data is primarily recorded to a single recording medium 20, the digital camera 10 is also capable of storing image data in internal memory (not shown in the drawings).

The recording media 20 are removable recording media that can be inserted into various electronic equipment. The recording media 20 shown by way of example in Fig. 1 are memory cards housing semiconductor memory. The recording media 20 may include a plurality of types of recording media, such as a one-time recording medium 1, a read-only recording medium 2, and a rewritable recording medium 3, for example.

The one-time recording medium 1 is a one-time recording medium to which data can be written once, with no rewrites. The one-time recording medium 1 may be configured, for example, as a one-time memory card provided with the one-time memory described above. The memory areas of one-time memory are not rewritten once data has been written thereto, and stored content remains therein even if supplied power is cut.

The read-only recording medium 2 is a recording medium from which is data is read but not written. The read-only recording medium 2 may be configured, for example, as a read-only memory card provided with read-only memory such as ROM (Read-Only Memory). Data is not written to read-only memory, and instead previously stored data is read therefrom. Stored content remains in read-only memory even if supplied power is cut.

The rewritable recording medium 3 is a recording medium for which the writing and rewriting of data are possible. The rewritable recording medium 3 may be configured, for example, as a rewritable memory card provided with rewritable memory such as flash memory. Data can be freely deleted and rewritten to rewritable memory any number of times, and stored content remains therein even if supplied power is cut.

As shown in Fig. 1, the rewritable recording medium 3 in accordance with the present embodiment is provided with a write-protect switch 4. The write-protect switch 4 is a physical switch for protecting stored data within the medium against accidental rewriting and deletion (i.e., write-protecting), and is provided on the exterior of the rewritable recording medium 3. The write-protected state of the rewritable recording medium 3 can thus be set or unlocked as a result of the user switching the write-protect switch 4 on or off. If the write-protect switch 4 is switched on (i.e., if the write-protect switch 4 is set to the LOCK position), then the rewritable recording medium 3 is set to a write-protected state that prevents the writing of data. On the other hand, if the write-protect switch 4 is switched off (i.e., if the write-protect switch 4 is set to the UNLOCK position), then the write-protected state of the rewritable recording medium 3 is unlocked, and the writing of data is enabled. Herein, it should be appreciated that the rewritable recording medium 3 is not limited to a configuration that includes the write-protect switch 4 described above. In such a case, the rewritable recording medium 3 may be set to a write-enabled state (i.e., a rewritable state) by default, unless set to a write-protected state by a technique different from the above.

Information regarding the on or off state of the write-protect switch 4 (i.e., write-protect on/off information) is saved in memory inside the rewritable recording medium 3. For this reason, the digital camera 10 into which the rewritable recording medium 3 has been loaded (i.e., the exemplary recording control apparatus herein) is able to read the write-protect on/off information from within the rewritable recording medium 3 via the output terminal of the rewritable recording medium 3. On the basis of the write-protect on/off information, the digital camera 10 is then able to determine whether or not the rewritable recording medium 3 is write-protected.

The one-time recording medium 1 in accordance with the present embodiment is not provided with the above write-protect switch, and thus the write-protected state of the one-time recording medium 1 is not locked or unlocked manually as a result of the user using a physical switch. Instead, the locking and unlocking of the write-protected state of the one-time recording medium 1 is automatically controlled by means of commands from the digital camera 10, to be hereinafter described.

The recording media 1, 2, and 3 described above are removably loaded into the recording medium interface 11, the loading unit of the digital camera 10. The recording medium interface 11 (hereinafter referred to as the recording medium I/F 11) corresponds to the loading unit of the present invention described earlier. The recording medium I/F 11 may be configured, for example, as one or more slots provided on the digital camera 10 as well as connection terminals or similar circuitry (not shown in the drawings) provided in the interior of the one or more slots. The above plurality of types of recording media 20 may thus be selectively loaded into and removed from the recording medium I/F 11. In the exemplary digital camera 10 shown in Fig. 1, a single recording medium I/F 11 is provided, and one of the above recording media 1, 2, or 3 may be selectively loaded thereinto. In so doing, the digital camera 10 can be made more compact.

However, the present invention is not limited to such an example, and the digital camera 10 may also be provided with a plurality of loading units (i.e., a plurality of recording medium interfaces 11). In this case, dedicated loading units for loading each type of recording medium among the plurality of types of recording media 20 may be separately provided. Alternatively, a plurality of shared loading units compatible with the plurality of types of recording media 20 may also be provided.

In addition, the digital camera 10 is also provided with an external interface 12 for connecting to external devices such as, for example, the personal computer 30 (hereinafter referred to as the PC 30). The external interface 12 (hereinafter referred to as the external I/F 12) is an interface for the input and output of data with respect to external devices, and may be configured to be any of various types of ports (i.e., connections), such as a USB (Universal Serial Bus) port or LAN (Local Area Network) port, for example.

By connecting the digital camera 10 to the PC 30 via such an external I/F 12, the operation of the digital camera 10 can be controlled by the PC 30, and image, audio, or other data stored within one of the recording media 20 loaded into the digital camera 10 can be output (i.e., displayed or output as audio) by the PC 30. However, in the case where a one-time recording medium has been loaded into the digital camera 10, the metadata in the one-time recording medium 1 (such as the time of last operation) will be automatically rewritten by the functions of the OS of the PC 30 as described above. If no measures are taken to address the above behavior, then the remaining free space on the one-time recording medium 1 will decrease independently of the user's actions.

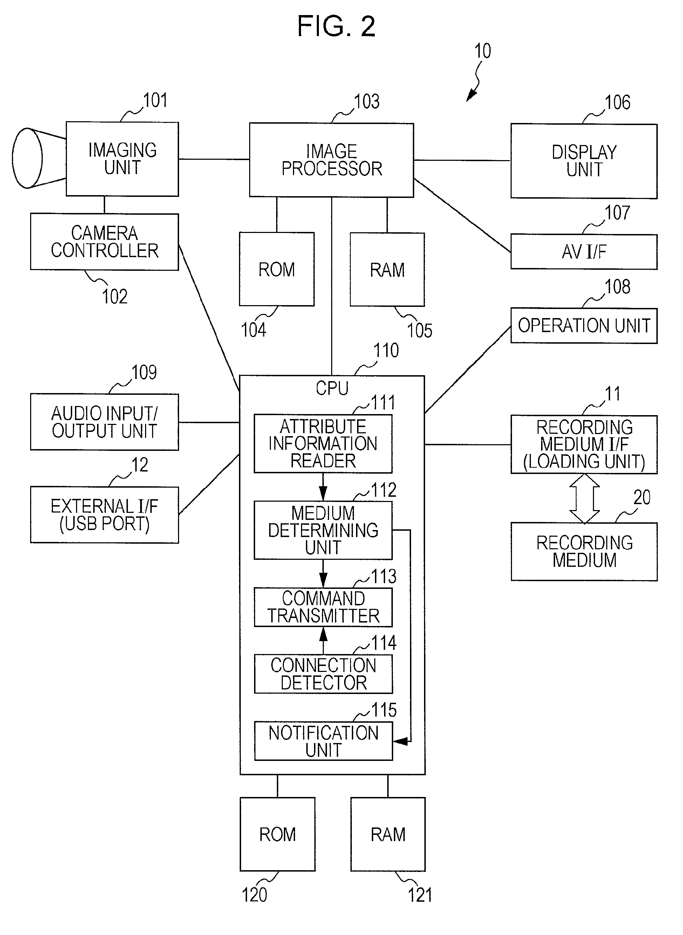

Next, the configuration of a digital camera 10 in accordance with the present embodiment will be described with reference to Fig. 2. Fig. 2 is a block diagram illustrating the configuration of a digital camera 10 in accordance with the present embodiment.

As shown in Fig. 2, the digital camera 10 includes an imaging unit 101, a camera controller 102, an image processor 103, ROM 104, RAM (Random Access Memory) 105, a display unit 106, an AV interface 107, an operation unit 108, an audio input/output unit 109, a CPU (Central Processing Unit) 110, ROM 120, RAM 121, the recording medium I/F 11 (corresponding to the one or more loading units), and the external I/F 12 (corresponding to the external interface).

The imaging unit 101 images a subject and generates an image signal. The imaging unit 101 includes optics made up of a lens group that focuses incident light from the subject to form an optical image, imaging elements that perform photoelectric conversion with respect to the optical image focused by the optics, as well as a driving mechanism for driving the above components.

The camera controller 102 controls the operation of the respective components of the imaging unit 101 on the basis of instructions from the CPU 110. For example, when acquiring an image, the camera controller 102 may control the driving mechanism of the imaging unit 101 according to user operations performed with respect to the operation unit 108, thereby causing components such as a zoom lens and a focus lens (not shown in the drawings) to be driven such that the subject is imaged with appropriate zoom, focus, or other settings.

The image processor 103 may be configured to be a digital signal processor (DSP) or similar circuit, and operates by using the ROM 104 and the RAM 105. The image processor 103 subjects the image signal received as input from the imaging unit 101 to various signal processing, such as white balance adjustment, color correction, edge enhancement, and gamma correction, for example.

After having been processed by the image processor 103, the image signal may then be displayed by the display unit 106 or output to external equipment via the AV interface 107. The display unit 106 may be configured to be a liquid crystal display or similar device, and displays information such as acquired image data and notification messages directed at the user (such as, for example, insufficient free space notifications, error notifications, or the write-protected notification to be hereinafter described).

The operation unit 108 may be configured to include a touch panel, buttons, switches, levers, dials, or similar components. By operating the operation unit 108, the user is able to issue instructions to the digital camera 10 for processing operations (such as imaging operations, adjustment operations for zoom, focus, aperture, exposure, shutter speed, and image quality, recording operations, and playback operations), as well input various data. The audio input/output unit 109 may include, for example, a microphone for inputting external audio, and one or more speakers for outputting audio for playback.

The CPU 110 is an exemplary computational processing and control apparatus, and functions as a controller that conducts general control of the digital camera 10. The CPU 110 executes various processes by following a program stored in the ROM 120 or similar memory. The RAM 121 stores, for example, programs executed by the CPU 110, as well as parameters or similar information that change according to the execution of such programs. In addition, the RAM 121 also functions as a buffer for reducing the frequency of access to a recording medium by the CPU 110.

The recording medium I/F 11 functions as a loading unit into which the above plurality of types of recording media 20 can be selectively loaded. The CPU 110 transmits and receives various data and commands to and from a recording medium via the recording medium I/F 11. The external I/F 12 may be configured to be a USB or similar port, for example, and can be connected to an external device such as the PC 30 via a USB or similar cable. The external I/F 12 has functions for transmitting and receiving various data and commands to and from an external device such as the PC 30 when such an external device is connected to the digital camera 10.

In addition, the above CPU 110 also functions as an attribute information reader 111, a medium determining unit 112, a command transmitter 113, a connection detector 114, and a notification unit 115. The above components 111 to 115 are realized as a result of the CPU 110 operating according to a program stored in the ROM 120 or similar memory. Hereinafter, these respective components of the CPU 110 will be described.

The attribute information reader 111 reads recording medium attribute information from a recording medium 20 that has been loaded into the recording medium I/F 11. When such reading processing is conducted, the attribute information reader 111 may, for example, directly access the memory within the recording medium 20 and thereby directly read the attribute information stored in the memory. Alternatively, the attribute information reader 111 may transmit a read command to the recording medium 20 and subsequently receive from the recording medium 20 attribute information that has been read from the recording medium 20 by the CPU 110 in accordance with the read command.

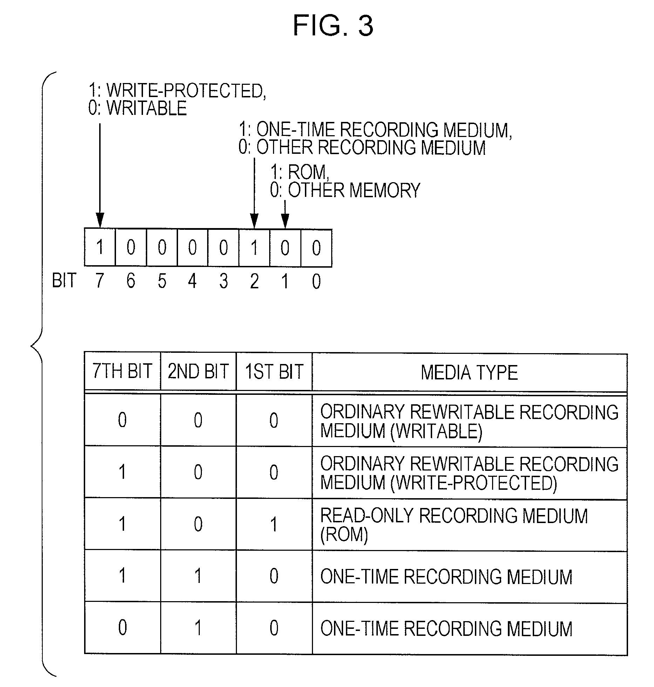

The attribute information of a recording medium 20 (may be hereinafter referred to simply as attribute information) will now be described with reference to Fig. 3. Attribute information includes various information expressing particular attributes of a recording medium 20 (such as medium type, whether or not the medium is in a write-protected state, manufacturing date, serial number, manufacturer, and memory capacity, for example). Such attribute information differs for each type of recording medium among the plurality of types of recording media 20. Among the various attribute information, the information expressing the medium type (i.e., type-identifying information) may be invariable information, such that the type-identifying information does not change regardless of whether the operating state of the recording medium 20 is set to a write-protected or unlocked state, for example.

The organization of attribute information is shown by way of example in Fig. 3. As shown in the upper portion of Fig. 3, attribute information may be expressed using 8-bit digital data, for example. The first bit of the data may indicate whether or not the particular recording medium 20 is a read-only recording medium 2, while the second bit of the data may indicate whether or not the particular recording medium 20 is a one-time recording medium 1. Using the above two bits, four types of recording media 20 can be expressed. In this way, the first and second bits of the data constitute information indicating the type of a particular recording medium 20 (i.e., type-identifying information). As shown in the lower portion of Fig. 3, a value of [0,0] for the second and first bits constituting the type-identifying information herein indicates a rewritable recording medium 3, a value of [0,1] indicates a read-only recording medium 2, and a value of [1,0] indicates a one-time recording medium 1.

In addition, the seventh bit of the data is a write-protect flag indicating whether or not the particular recording medium 20 is in a write-protected state. A value of [0] for the seventh bit herein indicates that the recording medium 20 is in a write-protected state, while a value of [1] indicates that the recording medium 20 is writable (i.e., the write protection is in an unlocked state). Since the write protection of a rewritable recording medium 3 and a one-time recording medium 1 can be unlocked, the write-protect flag is variable for such media (wherein [1] indicates a write-protected state, and [0] indicates a writable state). In contrast, the write-protect flag is invariable information for a read-only recording medium 2, and thus the write-protect flag is set to a fixed value (i.e., [1], thereby indicating a write-protected state).

By using attribute information as described above, the type of a particular recording medium 20 can be determined, while in addition, it can be determined whether or not that recording medium 20 is in a write-protected state. Furthermore, it can be determined whether or not the write-protected state is unlockable by means of a command.

Returning again to Fig. 2, the remaining components of the CPU 110 will now be described. The medium determining unit 112 determines the type of a recording medium 20 on the basis of attribute information read from a particular recording medium 20 by the attribute information reader 111. For example, in the example shown in Fig. 3, the medium determining unit 112 can determine whether or not a particular recording medium 20 is a one-time recording medium 1 on the basis of whether or not the type-identifying information included in the attribute information (i.e., the second and first bits) is [1,0].

In addition, the medium determining unit 112 determines whether or not a particular recording medium 20 is in a write-protected state. For example, in the example shown in Fig. 3, the medium determining unit 112 determines that a recording medium 20 is in a write-protected state if the write-protect flag in the attribute information (i.e., the seventh bit) is [1], and in an unlocked state (i.e., a writable state) if the write-protect flag is [0]. In addition, if the particular recording medium 20 is in a write-protected state, then the medium determining unit 112 is also able to determine whether or not the write-protected state is unlockable by means of a command. For example, in the example shown in Fig. 3, if the medium determining unit 112 refers to both the write-protect flag and the type-identifying information and thereby determines that the particular recording medium 20 is either a read-only recording medium 2 or a rewritable recording medium 3, then the medium determining unit 112 also determines that unlocking by command is not available for the current recording medium 20. In contrast, if the medium determining unit 112 determines that the particular recording medium 20 is a one-time recording medium 1, then the medium determining unit 112 also determines that unlocking by command is available if remaining free space exists, and unavailable if remaining free space does not exist.

In addition, the medium determining unit 112 also determines whether or not remaining free space exists on a particular recording medium 20 on the basis of information received as a result of querying the CPU of the recording medium 20 for the remaining free space. It is also possible for the medium determining unit 112 to detect the remaining free space on the recording medium 20.

The command transmitter 113 automatically transmits various commands to a particular recording medium 20 that has been loaded into the recording medium I/F 11. Such commands include an unlock command for unlocking the write-protected state of a one-time recording medium 1, as well as a lock command for setting a one-time recording medium 1 to a write-protected state. If it is determined that the recording medium is a one-time recording medium that has been set to a write-protected state in advance, and additionally that remaining free space exists thereon, then the command transmitter 113 transmits an unlock command to the one-time recording medium 1. In cases other than above, an unlock command is not transmitted to the recording medium. In addition, if the connection detector 114 detects that the digital camera 10 has been connected to a PC 30 via the external I/F 12 while the write protection of a one-time recording medium 1 loaded into the digital camera 10 is in an unlocked state, then the command transmitter 113 automatically transmits a lock command to the one-time recording medium 1.

The connection detector 114 detects whether or not the digital camera 10 is connected to a PC 30 via the external I/F 12. If a connection is detected, then the connection detector 114 notifies the command transmitter 113.

The notification unit 115 outputs a notification indicating that data fails to record (i.e., a recording failure notification) if either a loaded rewritable recording medium 3 is in a write-protected state (i.e., write-protected by means of the write-protect switch 4), or if the loaded recording medium is a read-only recording medium (ROM). The notification unit 115 may, for example, cause the display unit 106 to display a notification indicating that the current recording medium is in a write-protected state. In addition, the notification unit 115 also outputs a notification indicating that no free space remains if the loaded recording medium is either a one-time recording medium 1 or a rewritable recording medium 3 and no remaining free space exists thereon. The notification method used for the above may include, for example, notifying the user by displaying a message on the display unit 106, notifying the user by outputting audio from the audio input/output unit 109, notifying the user by means of a vibration function, or by means of a combination of the above.

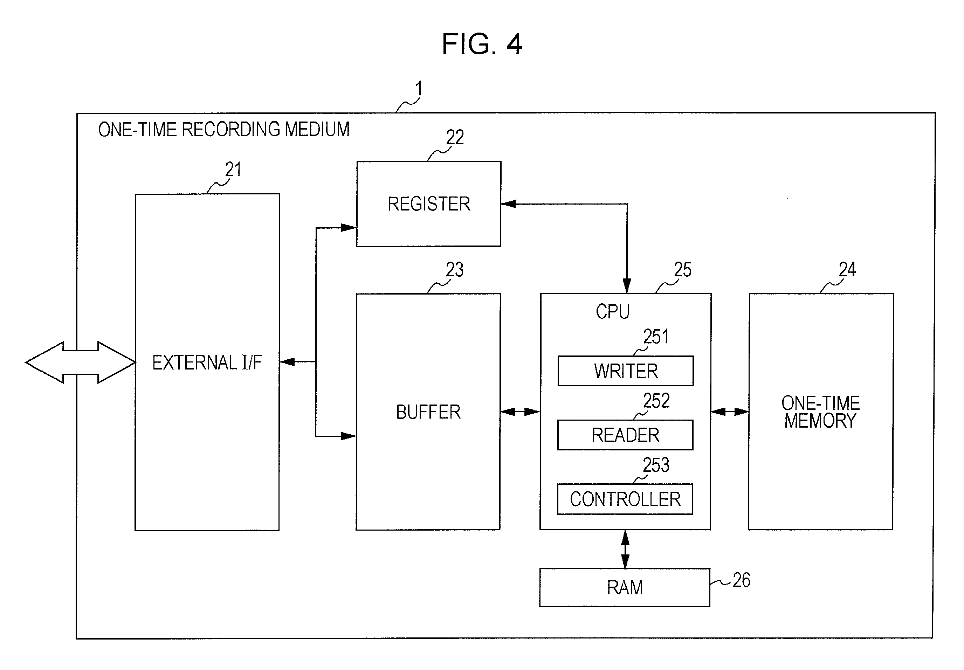

Next, the configuration of a one-time recording medium 1 in accordance with the present embodiment will be described with reference to Fig. 4. Fig. 4 is a block diagram illustrating the configuration of a one-time recording medium 1 in accordance with the present embodiment.

As shown in Fig. 4, the one-time recording medium 1 includes an external interface 21 (hereinafter referred to as the external I/F 21), a register 22, a buffer 23, a CPU 25, RAM 26, and one-time memory 24. Herein, the register 22 and the one-time memory 24 correspond to the attribute information storage unit described earlier, while the one-time memory 24 corresponds to the data storage unit, and the CPU 25 corresponds to the writer and the controller.

The external I/F 21 is an interface for the input and output of data between the one-time recording medium 1 and a host device (such as the digital camera 10, for example) into which the one-time recording medium 1 is loaded. The external I/F 21 has functions for sending and receiving various data and commands to and from the host device.

The register 22 includes memory elements used to store computational or execution states. The register 22 may, for example, function as a switch for the exchange of commands between a host device (such as the digital camera 10, for example) and the CPU 25 of the one-time recording medium 1, or as a storage unit for reading the internal state of the one-time recording medium 1 from the one-time memory 24. When the one-time recording medium 1 is powered on, the attribute information of the one-time recording medium 1 (such as the type-identifying information, the write-protect flag, and medium size (i.e., memory capacity) information) is read from the one-time memory 24 and then stored in the register 22.

By reading and then saving the attribute information in the register 22 at power-on, the controller 253 of the CPU 25 to be hereinafter described is able to rewrite the write-protect flag saved in the register 22 and thereby set the one-time recording medium 1 to a write-protected state (i.e., set the write-protect flag to 1) or unlock the write-protected state (i.e., set the write-protect flag to 0). In addition, when the one-time recording medium 1 is powered off, the attribute information in the register 22 (i.e., the copy of the attribute information) is deleted, leaving just the attribute information within the one-time memory 24 (i.e., the original attribute information). In this way, although the write-protect flag that is saved in the register 22 at power-on (i.e., the copy) can be rewritten to 0 or 1, the write-protect flag stored in the one-time memory 24 (i.e., the original) is not rewritten, and instead remains set to 1 (i.e., the write-protected state). Consequently, the write-protect flag read from the register 22 when the one-time recording medium 1 is powered on is 1 by default, but can be immediately rewritten to 0 by the digital camera 10.

The buffer 23 is a storage unit that temporarily saves data in order to alleviate differences in processing speeds versus transfer speeds. The buffer 23 temporarily saves the data to be actually written to the one-time memory 24, and has functions for normalizing the read and write speeds.

The one-time memory 24 is a storage device that allows data to be written once, with no rewrites. The one-time memory 24 herein is lower in cost than the flash memory used in the rewritable recording medium 3. The one-time memory 24 stores various types of data, including digital content such as images, audio, and text data, as well as attribute and other information. Data to be recorded is transferred from the host device (i.e., the digital camera 10) to the one-time recording medium 1, and then written to the one-time memory 24 by the CPU 25.

When the one-time recording medium 1 is powered off, attribute information is stored in a memory area in a portion of the one-time memory 24. When the one-time recording medium 1 is powered on, a copy of the attribute information is then saved in the register 22. In so doing, the host device into which the one-time recording medium 1 has been loaded is able to read the attribute information saved in the register 22.

The CPU 25 herein is an exemplary computational processing and control apparatus, and functions as a controller that conducts general control of the one-time recording medium 1. The CPU 25 executes various processes by following a program stored in the one-time memory 24 or similar memory. The RAM 26 stores, for example, programs executed by the CPU 25, as well as parameters or similar information that change according to the execution of such programs.

The CPU 25 functions as a writer 251, a reader 252, and a controller 253. The writer 251, reader 252, and controller 253 herein are realized as a result of the CPU 25 operating according to a program stored in the one-time memory 24 or similar memory. Hereinafter, these respective components of the CPU 25 will be described.

The writer 251 writes data to the one-time memory 24 that has been received from a host device (such as the digital camera 10, for example) into which the one-time recording medium 1 has been loaded, wherein the writing is conducted on the basis of instructions also received from the host device. The reader 252 reads and then transmits data from the one-time memory 24 to the host device on the basis of instructions from the host device. The operation of the writer 251 and the reader 252 herein is controlled by the controller 253.

In addition, depending on the value of the write-protect flag stored in the register 22, the operation of the reader 252 may be set to a write-protected state (i.e., a write-protected mode, wherein the unit flag equals 1) or an unlocked state (i.e., an unlocked mode, wherein the unit flag equals 0).

The controller 253 controls data write operations with respect to the one-time memory 24 (i.e., the data storage unit) by the writer 251, wherein the control is conducted on the basis of commands received from the host device (i.e., the digital camera 10). More specifically, when the one-time recording medium 1 is not loaded into a host device, the controller 253 sets the writer 251 to a write-protected state by default. When the reader 252 is set to a write-protected state, data is prevented from being written to the one-time memory 24. The writer 251 may be set to a write-protected state in advance, such as when the one-time recording medium 1 is shipped from the manufacturing facility. The writer 251 then continues to remain in a write-protected state until the one-time recording medium 1 is loaded into a host device that is compatible with the one-time recording medium 1 (such as the digital camera 10, for example). Although data is not written when the one-time recording medium 1 is set to a write-protected state, the reading of data is possible, and thus in such a state the one-time recording medium 1 functions similarly to a read-only recording medium 2.

In addition, when the one-time recording medium 1 is loaded into the digital camera 10, the controller 253 first transmits attribute information read from the register 22 to the digital camera 10. Upon receiving an unlock command for unlocking the write-protected state from the digital camera 10 in response, the controller 253 unlocks the write-protected state of the writer 251. As a result, the writing of data to the one-time memory 24 by the writer 251 is enabled.

In addition, when the write-protected state of the writer 251 is unlocked in this way, if the controller 253 subsequently receives a lock command for setting the one-time recording medium 1 to a write-protected state, then the controller 253 sets the writer 251 back to the write-protected state. As a result, the writer 251 is prevented from further writing data to the one-time memory 24.

Meanwhile, if the one-time recording medium 1 is loaded into an information processing device (such as the PC 30, for example) that is incompatible with the one-time recording medium 1 (i.e., a device other than a host device such as the digital camera 10 that is compatible with the one-time recording medium 1), then the controller 253 maintains the current state without unlocking the write-protected state that has been set in advance. Herein, an information processing device that is incompatible with the one-time recording medium 1 is a device that does not, for example, transmit an unlock command when the one-time recording medium 1 is loaded thereinto, and thus is not configured to be able to record data to the one-time recording medium 1. Furthermore, among such information processing devices, there exist devices having functions for automatically updating file metadata (being realized by the OS of the PC 30, for example). When a one-time recording medium that is not set to a write-protected state is loaded into such a device, the remaining free space thereon decreases. In contrast, the one-time recording medium 1 in accordance with the present embodiment is set to a write-protected state in advance, such as when the one-time recording medium 1 is shipped from the manufacturing facility. For this reason, even if the one-time recording medium 1 is accidently loaded into a device such as the above, information such as file metadata stored on the one-time recording medium 1 is not automatically rewritten or deleted without the user's consent, thereby preventing wasteful reductions in the remaining free space in the one-time memory 24.

In addition, in the case where the write-protected state of the writer 251 is unlocked as a result of the one-time recording medium 1 being loaded into the digital camera 10 as described above, the controller 253 sets the writer 251 back to a write-protected state when the one-time recording medium 1 is removed from the digital camera 10. In addition, the controller 253 also sets the writer 251 back to a write-protected state when the one-time recording medium 1 is reset by the digital camera 10. Furthermore, the controller 253 also sets the writer 251 back to a write-protected state when the one-time recording medium 1 is powered off. In so doing, even though the one-time recording medium 1 is not loaded into a suitable host device, the write-protected state of the writer 251 is prevented from being left in an unlocked state.

In the foregoing, the configuration of a one-time recording medium 1 in accordance with the present embodiment is described with reference to Fig. 4. However, it should be appreciated that a read-only recording medium 2 can be configured similarly to that shown in Fig. 4, differing only in that the one-time memory 24 shown in Fig. 4 is replaced with read-only memory (such as ROM) and the controller 253 is not provided. In addition, a rewritable recording medium 3 can also be configured similarly to that shown in Fig. 4, differing only that the one-time memory 24 shown in Fig. 4 is replaced with rewritable memory (such as flash memory) and the controller 253 is not provided.

The foregoing thus describes the configuration of a recording system in accordance with the present embodiment. The operation of such a recording system in accordance with the present embodiment will now be described.

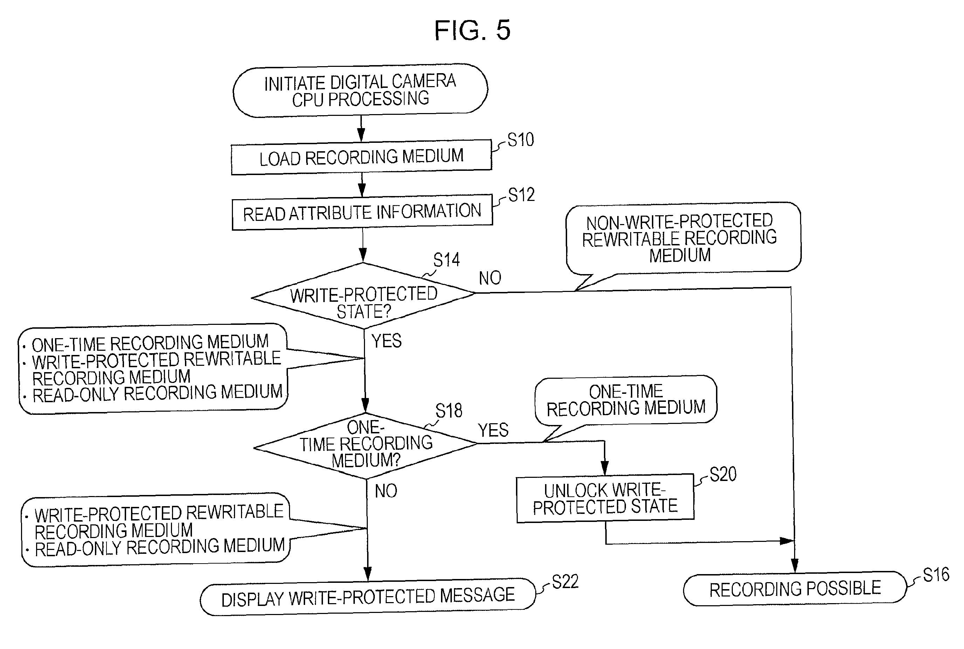

First, operation will be described with reference to Fig. 5 for the case wherein an arbitrary recording medium 20 is loaded into the digital camera 10 that herein acts as a recording control apparatus (referred to as a host device above) in accordance with the present embodiment. Fig. 5 is a flowchart illustrating the operation of the digital camera 10 when a recording medium 20 in accordance with the present embodiment is loaded thereinto.

As shown in Fig. 5, when an arbitrary recording medium 20 is loaded into the recording medium I/F 11 (i.e., the loading unit) of the digital camera 10, the CPU 110 of the digital camera 10 first detects that the recording medium 20 has been loaded (step S10). The detection method herein may involve, for example, detecting the flow of current between the digital camera 10 and the recording media 20 once the connection terminal of the recording medium I/F 11 of the digital camera 10 and the connection terminal of the recording medium 20 have made contact. Alternatively, the loading of the recording medium 20 may be detected by providing a physical sensor (such as a contact sensor or optical sensor) in the slot of the recording medium I/F 11.

Subsequently, the CPU 110 of the digital camera 10 reads, from the recording medium 20 that was loaded into the digital camera 10, the attribute information stored within that recording medium 20 (step S12). Since the recording medium 20 is powered on as a result of the power supplied from the digital camera 10 upon being loaded into the digital camera 10, the attribute information stored in the one-time memory 24 is first copied to the register 22. For this reason, the CPU 110 of the digital camera 10 accesses the register 22 of the recording medium 20 and is thereby able to read the attribute information therefrom.

Subsequently, the CPU 110 of the digital camera 10 detects, on the basis of the attribute information that was read above, whether or not the recording medium 20 loaded into the digital camera 10 is in a write-protected state (step S14). As shown by way of example in Fig. 3, the attribute information may contain a write-protect flag (i.e., the seventh bit). For this reason, the CPU 110 is able to determine whether or not the recording medium 20 loaded into the digital camera 10 is in a write-protected state by referring to the write-protect flag in the attribute information (wherein a flag value of [1] indicates a write-protected state, and a flag value of [0] indicates an unlocked state).

If the state of the recording medium 20 is determined to be (a) a rewritable recording medium 3 not write-protected by means of a write-protect switch 4, then the recording medium 20 is not in a write-protected state (i.e., the write-protect flag is [0]), and thus the process proceeds to step S16, wherein the CPU 110 of the digital camera 10 becomes able to record data to the rewritable recording medium 3 (step S16).

In contrast, if the state of the recording medium 20 is determined to be (b) a one-time recording medium 1, (c) a rewritable recording medium 3 write-protected by means of a write-protect switch 4, or (d) a read-only recording medium 2, then the recording medium 20 is in a write-protected state (i.e., the write-protect flag is [1]), and thus the process proceeds to step S18. Subsequently, the CPU 110 of the digital camera 10 determines, on the basis of the type-identifying information contained in the attribute information (i.e., the first and second bits shown in Fig. 3), whether or not the recording medium 20 loaded into the digital camera 10 is a one-time recording medium 1 (step S18). The above determination is equivalent to determining whether or not the write protection of the recording medium 20 loaded into the digital camera 10 is unlockable by means of a command.

If the recording medium 20 is determined to be a one-time recording medium 1, then the process proceeds to step S20, wherein the CPU 110 of the digital camera 10 automatically unlocks the write-protected state by transmitting an unlock command to the one-time recording medium 1 (step S20). In so doing, the CPU 110 of the digital camera 10 becomes able to record image data obtained as a result of imaging processing to the one-time recording medium 1 (step S16).

However, if the recording medium 20 is determined in step S18 to be a write-protected rewritable recording medium 3 or a read-only recording medium 2, then the CPU 110 is unable to automatically unlock the write-protected state by means of a command. For this reason, the notification unit 115 causes a message to be displayed on the display unit 106 indicating that the recording medium 20 is write-protected (step S22).

By means of the above process flow, the write-protected state of a recording medium 20 of a given type is determined (step S14). It is then determined whether or not the write-protected state is unlockable by means of a command (step S18). If the recording medium 20 is a one-time recording medium 1, then the write-protected state can be automatically unlocked. Consequently, the user is able to use the one-time memory 24 without performing any special operations, while also knowing the state of a given type of recording medium 20.

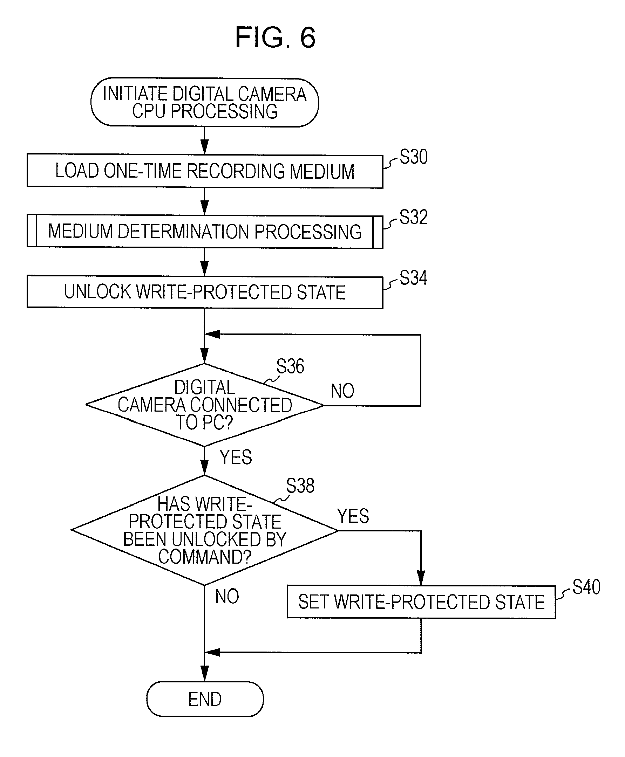

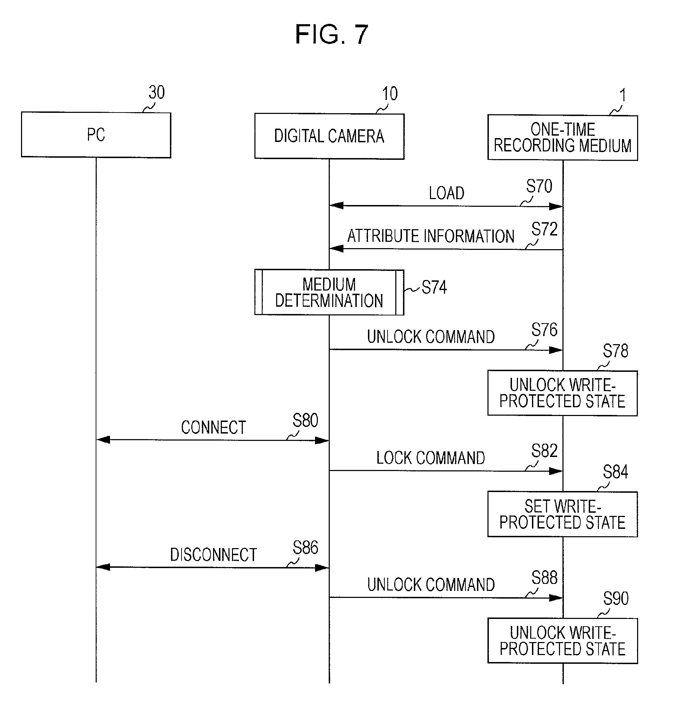

Next, operation will be described with reference to Fig. 6 for the case wherein a PC 30 is connected to a digital camera 10 having a one-time recording medium 1 in accordance with the present invention loaded thereinto. Fig. 6 is a flowchart illustrating the operation of a digital camera 10 in accordance with the present embodiment when a PC 30 is connected thereto. Fig. 7 is a sequence diagram illustrating the operation of a digital camera 10 in accordance with the present embodiment when a PC 30 is connected thereto.

As shown in Fig. 6, when a one-time recording medium 1 is loaded into the recording medium I/F 11 (i.e., the loading unit) of a digital camera 10, the CPU 110 of the digital camera 10 first detects that the one-time recording medium 1 has been loaded (step S30). Subsequently, and similarly to steps S12, S14, and S18 in Fig. 5, the CPU 110 of the digital camera 10 reads attribute information, determines whether or not the one-time recording medium 1 is in a write-protected state, and then conducts medium determination processing to determine whether or not the recording medium is a one-time recording medium 1 (step S32). If the recording medium is determined to be a one-time recording medium 1, then the CPU 110 of the digital camera 10 unlocks the write-protected state by automatically transmitting an unlock command to the one-time recording medium 1 (step S34). In so doing, the digital camera 10 becomes able to record various data to the one-time recording medium 1.

When a one-time recording medium 1 is loaded into a digital camera 10, and additionally, when the write-protected state of the one-time recording medium 1 is unlocked as described above, the CPU 110 of the digital camera 10 continuously monitors the digital camera 10 to determine whether or not a PC 30 (i.e., an external information processing device) has been connected to the digital camera 10 (step S36).

The PC 30 herein has functions for automatically updating the metadata of files stored within accessed devices. For this reason, when the PC 30 is connected to the digital camera 10, file metadata within the one-time recording medium 1 might be automatically rewritten as a result of the functions of the OS or other processing in the PC. For example, when data is transferred between the PC 30 and the one-time recording medium 1 via the digital camera 10, the PC 30 may directly access a file within the one-time recording medium 1 and automatically write metadata to the one-time recording medium 1, such as a time value indicating when an operation on a file within the recording medium was last performed. In this way, the PC 30 automatically rewrites metadata in the unlocked one-time recording medium 1 without the user's consent, thereby decreasing the remaining free space in the one-time recording medium 1. For this reason, when the digital camera 10 is connected to the PC 30, it is desirable to set the one-time recording medium 1 to a write-protected state.

Consequently, upon detecting a connection between the digital camera 10 and the PC 30, the CPU 110 of digital camera 10 determines, on the basis of the write-protect flag, whether or not the write-protected state of the one-time recording medium 1 is unlocked (step S38). If the write-protected state is determined to be unlocked, then the CPU 110 of the digital camera 10 transmits a write-protect flag to the one-time recording medium 1, thereby setting the one-time recording medium 1 back to a write-protected state (step S40).

The sequence diagram shown in Fig. 7 will now be described. As shown in Fig. 7, when a one-time recording medium 1 is loaded into the digital camera 10 (step S70), the CPU 110 of the digital camera 10 reads the attribute information from the one-time recording medium 1 (step S72), and then determines the type of the medium loaded into the digital camera 10 (step S74). Subsequently, the CPU 110 of the digital camera 10 transmits an unlock command to the one-time recording medium 1 (step S76). In response to the received unlock command, the CPU 25 of the one-time recording medium 1 unlocks the write-protected state of the one-time recording medium 1, thereby setting the one-time recording medium 1 to a data-writable state (step S78). In so doing, the unlocked one-time recording medium 1 functions similarly to a rewritable recording medium 3, thereby enabling the digital camera 10 to freely write and read data to and from the one-time recording medium 1.

When a PC 30 is connected to the digital camera 10 while in the above state (step S80), the CPU 110 of the digital camera 10 transmits a lock command to the one-time recording medium 1 upon detecting the connection (step S82). As a result, the CPU 25 of the one-time recording medium 1 sets the one-time recording medium 1 to a write-protected state (step S84). In so doing, the PC 30 is prevented from writing data to the one-time recording medium 1, and the remaining free space on the one-time recording medium 1 is prevented from decreasing. Furthermore, the digital camera 10 is also prevented from writing data to the one-time recording medium 1.

When the connection between the digital camera 10 and the PC 30 is later disconnected (step S86), the CPU 110 of the digital camera 10 transmits an unlock command to the one-time recording medium 1 upon detecting the disconnection (step S88). As a result, the CPU 25 of the one-time recording medium 1 unlocks the write-protected state of the one-time recording medium 1 (step S90). In so doing, the digital camera 10 becomes able to write data to the one-time recording medium 1. However, since the digital camera 10 does not have functions like those of the PC 30 for automatically updating the metadata of operated files, the remaining free space on the one-time recording medium 1 is not automatically reduced by the digital camera 10 without the user's consent.

The above thus describes operation in the case where a PC 30 (i.e., an information processing device) is connected to a digital camera 10 (i.e., a recording control apparatus) in accordance with the present embodiment. As a result of such operation, when the digital camera 10 and the PC 30 are connected, the digital camera 10 reverts the one-time recording medium 1 back to a write-protected state, thereby automatically write-protecting the medium. Consequently, even if data is communicated (such as during a data read) between the PC 30 and the one-time recording medium 1 via the digital camera 10, data within the write-protected one-time recording medium 1 is not rewritten. As a result, decreases in the remaining free space in the one-time recording medium 1 are appropriately prevented according to how the one-time recording medium 1 and surrounding devices are being used.

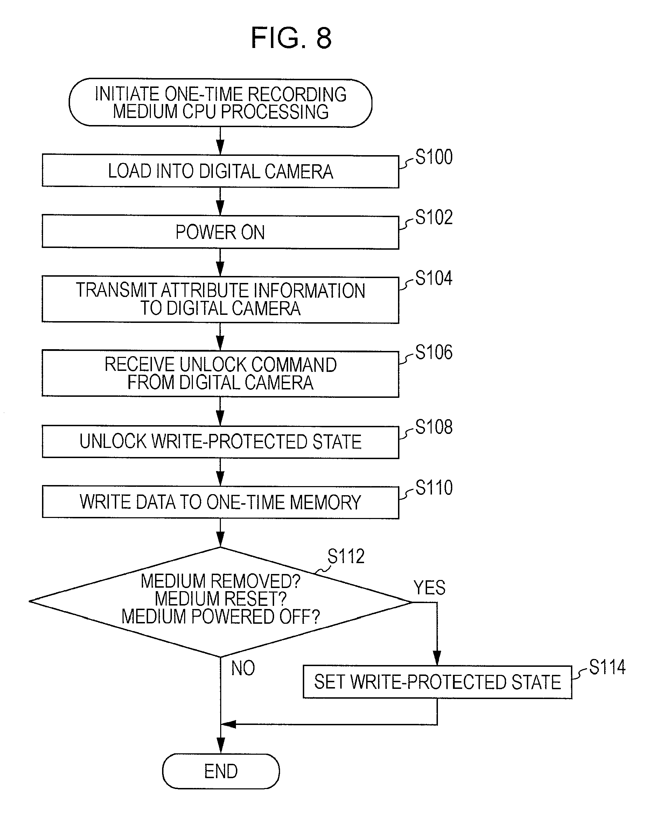

Next, the operation of a one-time recording medium 1 loaded into a digital camera 10 in accordance with the present embodiment will be described with reference to Fig. 8. Fig. 8 is a flowchart illustrating the operation of a one-time recording medium 1 that has been loaded into a digital camera 10 in accordance with the present embodiment.

As shown in Fig. 8, when a one-time recording medium 1 is loaded into a digital camera 10 (step S100), the one-time recording medium 1 is first powered on as a result of being supplied with power from the digital camera 10 via a power terminal (step S102). Subsequently, the CPU 25 of the one-time recording medium 1 reads attribute information from the one-time memory 24 and saves a copy thereof to the register 22, while additionally transmitting the attribute information to the digital camera 10 (step S104). In the above step, the one-time recording medium 1 is set to a write-protected state (i.e., the write-protect flag is [1]). By means of the type-identifying information contained in the attribute information, the digital camera 10 determines that the loaded recording medium 20 is a one-time recording medium 1, and subsequently transmits an unlock command to the one-time recording medium 1.

Subsequently, upon receiving the unlock command from the digital camera 10 (step S106), the CPU 25 of the one-time recording medium 1 unlocks the write-protected state of the one-time recording medium 1 (step S108). More specifically, the CPU 25 sets the writer 251 that writes data to the one-time memory 24 to an unlocked mode by rewriting the write-protect flag saved in the register 22 from [1] to [0]. By unlocking the write protection, the digital camera 10 becomes able to freely record arbitrary data, such as image data, to the one-time memory 24 of the one-time recording medium 1 (step S110).

The CPU 25 of the one-time recording medium 1 then continuously monitors the one-time recording medium 1 to determine whether or not the one-time recording medium 1 has been removed from the digital camera 10, reset by the digital camera 10, or powered off (step S112). If the one-time recording medium 1 is removed from the digital camera 10, reset, or powered off, then the CPU 25 sets the one-time recording medium 1 to a write-protected state before the one-time recording medium 1 is completely powered off. More specifically, the CPU 25 sets the writer 251 that writes data to the one-time memory 24 to a write-protected state by rewriting the write-protect flag saved in the register 22 from [0] to [1].

In this way, when the one-time recording medium 1 is removed from the digital camera 10 or powered off, the CPU 25 of the one-time recording medium 1 resets itself with respect to the unlock command previously received from the digital camera 10, thereby causing the one-time recording medium 1 to revert to a write-protected state.

The one-time recording medium 1 is provided with a detection terminal that detects contact with the output terminal of the recording medium I/F 11 (i.e., the loading unit) of the digital camera 10. The one-time recording medium 1 is thus removed if the output terminal and the detection terminal are separated. As a result, the CPU 25 of the one-time recording medium 1 is able to detect when the one-time recording medium 1 is removed on the basis of the contact state of the detection terminal. The one-time recording medium 1 herein is constructed such that, when removed, the power terminal of the one-time recording medium 1 is separated from the power terminal of the digital camera 10 after the detection terminal is separated from the output terminal. Consequently, during the slight amount of time between the separation of the detection terminal and the separation of the power terminal, the CPU 25 detects the removal of the one-time recording medium 1 and performs reset processing.

In addition, since the one-time recording medium 1 is supplied with power from the digital camera 10, the one-time recording medium 1 is powered off if the digital camera 10 is powered off. Thus, the CPU 25 of the one-time recording medium 1 also detects the powering off of the one-time recording medium 1 on the basis of a decrease in the supplied voltage from the digital camera 10 or similar change. The CPU 25 then performs reset processing during the slight amount of time before fully powering off.

In addition, the CPU 25 also reverts the one-time recording medium 1 to a write-protected state when the one-time recording medium 1 is reset by the digital camera 10. For example, if the digital camera 10 transmits a command to the one-time recording medium 1 but does not receive a response therefrom, the digital camera 10 subsequently transmits a reset command to the one-time recording medium 1, thereby resetting the one-time recording medium 1. Upon receiving the reset command transmitted from the digital camera 10 to the one-time recording medium 1, the CPU 25 of the corresponding one-time recording medium 1 performs reset processing. If the CPU 25 of the one-time recording medium 1 performs reset processing during a data write, then the current write operation is terminated. Thus, in the case where power to the digital camera 10 fails, the one-time recording medium 1 executes self-induced reset processing.

In this way, when a one-time recording medium 1 in accordance with the present embodiment is removed from the digital camera 10, reset, or powered off, the one-time recording medium 1 reverts itself to a write-protected state. In so doing, the one-time recording medium 1 remains in a write-protected state until the one-time recording medium 1 is subsequently loaded into another compatible device such as a digital camera 10, the reset operation is completed, or until the next power on. For this reason, inappropriate data is prevented from being written to the one-time recording medium 1.

### Second Embodiment

A recording medium control method for a recording system in accordance with the second embodiment of the present invention will now be described. While the second embodiment differs from the first embodiment in the operational flow that occurs when the one-time recording medium 1 is loaded into the digital camera 10, other functional features are nearly identical, and for this reason detailed explanation of such features is omitted herein for the sake of brevity.

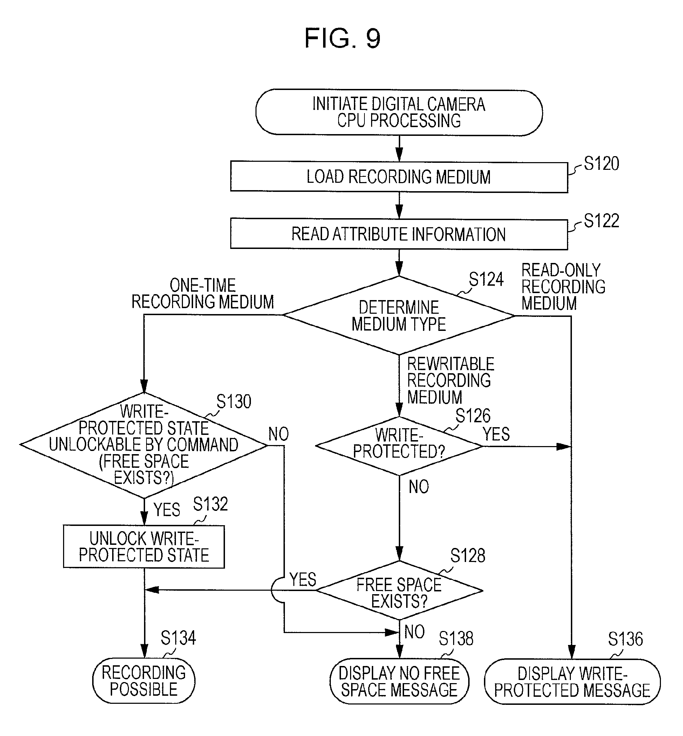

Hereinafter, operation will be described with reference to Fig. 9 for the case wherein an arbitrary recording medium 20 is loaded into a digital camera 10 (i.e., a recording control apparatus) in accordance with the second embodiment. Fig. 9 is a flowchart illustrating the operation of a digital camera 10 when a recording medium 20 in accordance with the second embodiment is loaded thereinto.

As shown in Fig. 9, when an arbitrary recording medium 20 is loaded into the recording medium I/F 11 (i.e., the loading unit) of the digital camera 10, the CPU 110 of the digital camera 10 detects that the recording medium 20 has been loaded (step S120). Subsequently, the CPU 110 of the digital camera 10 reads, from the recording medium 20 loaded into the digital camera 10, the attribute information stored within the recording medium 20 (step S122).

The CPU 110 of the digital camera 10 then determines the type of the recording medium 20 loaded into the digital camera 10 on the basis of the attribute information that was read above (step S124). As described earlier, the CPU 110 is able to determine the type of the recording medium 20 loaded into the digital camera 10 by means of the type-identifying information contained in the attribute information (see Fig. 3).

If the recording medium 20 is determined to be a rewritable recording medium 3, then the CPU 110 subsequently determines whether or not the rewritable recording medium 3 has been set to a write-protected state by means of a write-protect switch 4 (step S126). As described earlier, the CPU 110 is able to determine whether or not a recording medium 20 is write-protected by reading particular attribute information (i.e., the write-protect flag) stored in that recording medium 20. If the rewritable recording medium 3 herein is determined to write-protected, then the CPU 110 of the digital camera 10 notifies the user by displaying a message on the display unit 106 indicating that the rewritable recording medium 3 is write-protected (step S136). If the rewritable recording medium 3 is determined to not be write-protected, then the CPU 110 subsequently detects whether or not there exists remaining free space on the rewritable recording medium 3 (step S128). If no remaining free space exists on the rewritable recording medium 3, then a message indicating the lack of sufficient free space is displayed on the display unit 106 (step S138). If remaining free space does exist, then the digital camera 10 becomes able to record data to the rewritable recording medium 3 (step S134).

If the recording medium 20 is determined in step S124 to be a read-only recording medium 2, then the CPU 110 notifies the user by displaying a message on the display unit 106 indicating that the current recording medium is write-protected (step S136). At this point, it is more convenient for the user if a notification is issued indicating that the current recording medium is a read-only medium.

If the recording medium 20 is determined in step S124 to be a one-time recording medium 1, then the CPU 110 subsequently determines whether or not the write-protected state of the one-time recording medium 1 is unlockable by means of a command (i.e., determines whether or not remaining free space exists on the one-time recording medium 1) (step S130). While a one-time recording medium 1 is normally unlockable by command, the write-protected state is not unlocked if no remaining free space exists on the one-time recording medium 1. Consequently, if no remaining free space exists on the one-time recording medium 1, the CPU 110 causes a message indicating the lack of sufficient free space to be displayed on the display unit 106 (step S138). In contrast, if remaining free space does exist on the one-time recording medium 1, then the CPU 110 transmits an unlock command to the one-time recording medium 1, thereby unlocking the write-protected state (step S132).

Thus, in the recording medium control method in accordance with the second embodiment, the type of the recording medium 20 loaded into the digital camera 10 is first determined. Subsequently, determination processing is suitably conducted for the specific type of recording medium 1, 2, or 3. In so doing, the state of the recording medium 20 can be efficiently determined.

The foregoing thus describes the first and second embodiments of the present invention. According to the foregoing embodiments, a one-time recording medium 1 able to write once with no rewrites is provided as a lower cost recording medium. This one-time recording medium 1 is set by default to a write-protected state in advance, such that the one-time recording medium 1 is continuously set to a write-protected state when not in use (i.e., when not loaded into a suitable device). In so doing, even if the one-time recording medium 1 is directly loaded into a PC 30, or alternatively, indirectly connected to a PC 30 via a recording control apparatus such as the digital camera 10, the rewriting of data in the one-time recording medium 1 by the PC 30 does not occur, thereby preventing unexpected (to the user) decreases in remaining free space.

Furthermore, when the one-time recording medium 1 is to be used, the write-protected state of the one-time recording medium 1 is automatically unlocked by a recording control apparatus such as the digital camera 10, thereby enabling the recording of data. Additionally, when the one-time recording medium 1 is removed from the digital camera 10 or when power fails, the one-time recording medium 1 is automatically set back to a write-protected state. In so doing, the user's time and effort is greatly reduced. Furthermore, in the present invention the one-time recording medium 1 is automatically unlocked, without the user first deciding whether the current recording medium is write-protected and then performing a manual unlocking operation with respect to the camera like that described in JP 2007-49283 cited earlier. For this reason, when the user is using the digital camera 10 to acquire images, photographic opportunities are not lost due to forgetting the operation to unlock the write-protected state of the one-time recording medium 1. Furthermore, when the digital camera 10 is connected to a PC 30, the write protection of the one-time recording medium 1 does not remain in an unlocked state that results in wasteful reductions in the remaining free space on the one-time recording medium 1.

When the digital camera 10 is connected to a PC 30, the one-time recording medium 1 is automatically set back to a write-protected state by the digital camera 10. In so doing, the PC 30 is prevented from deleting or rewriting data in the one-time recording medium 1, and thus the gradual loss of remaining free space on the one-time recording medium 1 without the user's knowledge is also prevented.

As described earlier, in the foregoing embodiments, important data, such as image data that has been acquired by the digital camera 10 and then saved to a recording medium 20, is protected from unwanted overwriting, deletions, or rewriting performed by a PC or other equipment. Moreover, photographic opportunities are not lost due to the user forgetting to unlock the write-protected state of the recording medium 20, nor is the recording medium 20 left in an unlocked state when connected to a PC. Consequently, the locking and unlocking of the write protection of a one-time recording medium 1 is appropriately and automatically controlled according to how the recording medium is being used.

The foregoing thus describes in detail preferred embodiments of the present invention with reference to the attached drawings. However, it should be appreciated that the present invention is not limited to such examples. It should be understood by those skilled in the art that various alterations and modifications may occur within the scope of the appended claims, and thus it should be furthermore understood that such alterations and modifications are to be naturally included in the technical scope of the present invention.

For example, in the foregoing embodiments, a digital still camera was described by way of example as the recording control apparatus of the present invention. However, the present invention is not limited to such an example. So long as the recording control apparatus is a recording device provided with data recording control functions with respect to a recording medium, a variety of electronic equipment may be applied thereto, including other imaging devices (such as different digital still cameras and surveillance cameras), audio recording devices (such as voice recorders and portable music recorders), video recording devices (such as CD recorders, DVD recorders, and HDD recorders), portable and stationary video game consoles, portable handsets (such as mobile phones), information processing devices (such as personal computers and PDAs), and car navigation devices.

In addition, a recording medium in accordance with an embodiment of the present invention (such as a one-time recording medium, a rewritable recording medium, or a read-only recording medium, for example) is not limited to the example of a memory card using semiconductor memory (such as flash memory) as described in the foregoing embodiments. So long as the recording medium is a removable medium that can be removably loaded into a loading unit of the recording control apparatus, an arbitrary type of recording medium may be used, such as an optical disc or magnetic disk, for example. Furthermore, the loading unit for the recording medium may be provided on the recording control apparatus, or externally attached thereto.

Consequently, a one-time recording medium in accordance with an embodiment of the present invention is not limited to the example of one-time semiconductor memory (such as a one-time memory card) able to write data once, as described in the foregoing embodiments. So long as the one-time recording medium is a recording medium housing a control apparatus (such as a CPU or microcontroller) that unlocks the write-protected state of the medium in response to a command, an arbitrary recording medium may be used. For example, (a) a recording medium provided with a one-time optical disc able to write data once (such as a CD-R or DVD-R, for example) and a control apparatus, or alternatively, (b) a magnetic storage apparatus provided with a one-time magnetic medium able to write data once and a control apparatus, may also be applied.

Furthermore, while the one-time recording medium 1 in accordance with the foregoing embodiments is not provided with a write-protect switch, the present invention is not limited to such an example, and the one-time recording medium may also be provided with a write-protect switch. In such a case, the locking and unlocking of the write protection of the one-time recording medium may be set both automatically by means of commands from the recording control apparatus, as well as manually using the write-protect switch.

## Claims

1. A recording control apparatus, comprising:
an attribute information reader (111) configured to read recording medium attribute information from a recording medium (20) that has been loaded into at least one loading unit (11) into which a plurality of types of recording media (1,2,3) may be removably loaded;
a medium determining unit (112) configured to determine, on the basis of the attribute information, whether or not the recording medium (20) is a one-time recording medium (1) capable of writing data once; and
a command transmitter (113) configured such that in the case where the recording medium (20) is a one-time recording medium (1) that has been set to a write-protected state in advance, the command transmitter (113) transmits to the recording medium (20) an unlock command for unlocking the write-protected state thereof.

2. The recording control apparatus according to Claim 1, further comprising:
an external interface (12) configured to connect to an information processing device (30) that is incompatible with the one-time recording medium (1); and
a connection detector (114) configured to detect a connection between the recording control apparatus (10) and the information processing device (30) via the external interface (12);
wherein if the write-protected state of the one-time recording medium (1) loaded into the at least one loading unit (11) is unlocked, and furthermore if the connection detector (114) detects a connection between the recording control apparatus (10) and the information processing device (30), then the command transmitter (113) transmits to the one-time recording medium (1) a lock command that sets the one-time recording medium (1) to a write-protected state.

3. The recording control apparatus according to Claim 1, wherein
the medium determining unit (112) is configured to determine whether or not there exists free memory space on the recording medium (20) loaded into the at least one loading unit (11), and
the command transmitter (113) is configured such that if the recording medium (20) loaded into the at least one loading unit (11) is a one-time recording medium (1), and additionally, if there exists free memory space on the one-time recording medium (1), then the command transmitter (113) transmits the unlock command to the one-time recording medium (1).

4. The recording control apparatus according to Claim 1, wherein
the medium determining unit (112) is configured such that if the recording medium (20) loaded into the at least one loading unit (11) is a one-time recording medium (1), then the medium determining unit (112) also detects whether or not the write-protected state of the one-time recording medium (1) is unlockable by means of a command, and
the command transmitter (113) is configured to transmit the unlock command to the one-time recording medium (1) if the write-protected state thereof is unlockable.

5. The recording control apparatus according to Claim 1, further comprising:
a notification unit (115);
wherein
the medium determining unit (112) is configured such that if the recording medium (20) loaded into the at least one loading unit (11) is a rewritable recording medium (3) for which the rewriting of data is possible, then the medium determining unit (112) determines whether or not the rewritable recording medium (3) has been set to a write-protected state by means of a write-protect switch (4), and
the notification unit (115) is configured to output a recording failure notification if the rewritable recording medium (3) is set to a write-protected state or if the recording medium (20) loaded into the at least one loading unit (11) is a read-only recording medium (2).

6. The recording control apparatus according to Claim 1, wherein the at least one loading unit (11) is configured such that a plurality of types of recording media (1,2,3) can be removably loaded thereinto.

7. A one-time recording medium that can be removably loaded into a recording control apparatus (10), and comprising:
a data storage unit (24) for which data can be written once;
an attribute information storage unit (22,24) configured to store one-time recording medium attribute information;
a writer (251) configured to write data to the data storage unit (24); and
a controller (253) configured to control the writing of data by the writer (251);
wherein
when the one-time recording medium (1) is not loaded into the recording control apparatus (10), the controller (253) sets the writer (251) to a write-protected state,
when the one-time recording medium (1) is loaded into the recording control apparatus (10), the controller (253) transmits to the recording control apparatus (10) the attribute information stored in the attribute information storage unit (22,24), and
upon receiving from the recording control apparatus (10) an unlock command for unlocking the write-protected state, the controller (253) unlocks the write-protected state.

8. The one-time recording medium according to Claim 7, wherein the controller (253) is configured to set the writer (251) back to a write-protected state if a lock command for setting the write-protected state is received from the recording control apparatus (10) while the write-protected state is unlocked.

9. The one-time recording medium according to Claim 7, wherein the controller (253) is configured to maintain the write-protected state of the writer (251) while the one-time recording medium (1) is loaded into an information processing device (30) that is incompatible with the one-time recording medium (1).

10. The one-time recording medium according to Claim 7, wherein the controller (253) is configured to set the writer (251) to a write-protected state if the one-time recording medium (1) is removed from the recording control apparatus (10), reset by the recording control apparatus (10), or powered off while in an unlocked state.

11. A recording system, comprising:
a one-time recording medium (1) capable of writing data once; and
a recording control apparatus (10) configured to control the recording of data with respect to the one-time recording medium (1);
wherein
the recording control apparatus (10) includes
an attribute information reader (111) configured to read recording medium attribute information from a recording medium (20) that has been loaded into at least one loading unit (11) into which a plurality of types of recording media (1,2,3) may be removably loaded,
a medium determining unit (112) configured to determine, on the basis of the attribute information, whether or not the recording medium (20) is a one-time recording medium (1), and
a command transmitter (113) configured such that, in the case where the recording medium (20) is a one-time recording medium (1) that has been set to a write-protected state in advance, the command transmitter (113) transmits to the recording medium (20) an unlock command for unlocking the write-protected state,
the one-time recording medium (1) includes
a data storage unit (24) for which data can be written once,
an attribute information storage unit (22,24) configured to store one-time recording medium attribute information,
a writer (251) configured to write data to the data storage unit (24), and
a controller (253) configured to control the writing of data by the writer (251),
and wherein
when the one-time recording medium (1) is not loaded into the recording control apparatus (10), the controller (253) sets the writer (251) to a write-protected state,
when the one-time recording medium (1) is loaded into the recording control apparatus (10), the controller (253) transmits to the recording control apparatus (10) the attribute information stored in the attribute information storage unit (22,24), and
upon receiving from the recording control apparatus (10) an unlock command for unlocking the write-protected state, the controller (253) unlocks the write-protected state.

12. A recording medium control method for a recording control apparatus (10) that controls the recording of data with respect to a plurality of types of recording media (1,2,3), the method comprising the steps of:
reading recording medium attribute information from a recording medium (20) that has been loaded into at least one loading unit (11) into which a plurality of types of recording media (1,2,3) may be removably loaded;
determining, on the basis of the attribute information, whether or not the recording medium (20) is a one-time recording medium (1) capable of writing data once; and
in the case where the recording medium (20) is a one-time recording medium (1) that has been set to a write-protected state in advance, transmitting to the recording medium (20) an unlock command for unlocking the write-protected state thereof.

13. A program that causes a computer to execute the steps of:
reading recording medium attribute information from a recording medium (20) that has been loaded into at least one loading unit (11) into which a plurality of types of recording media (1,2,3) may be removably loaded;
determining, on the basis of the attribute information, whether or not the recording medium (20) is a one-time recording medium (1); and
in the case where the recording medium (20) is a one-time recording medium (1) that has been set to a write-protected state in advance, transmitting to the recording medium (20) an unlock command for unlocking the write-protected state thereof.
